# EUROPÄISCHE PATENTSCHRIFT

(11) **EP 0 598 209 B1**
(45) Veröffentlichungstag und Bekanntmachung des Hinweises auf die Patenterteilung: **22.05.1996**
(21) Anmeldenummer: 93116030.3
(22) Anmeldetag: 05.10.1993
(51) Int. Cl.: B60J 1/10, B60J 1/00

(54) **Isolierverglasung für eine Fensteröffnung eines Kraftfahrzeuges**
Double glazing for a window opening of a motorvehicle
Vitrage isolant pour une ouverture de fenêtre de véhicule automobile

(30) Priorität: 14.11.1992 DE 4238489
(43) Veröffentlichungstag der Anmeldung: 25.05.1994
(73) Patentinhaber: MERCEDES-BENZ AG, D-70327 Stuttgart (DE)
(72) Erfinder: Mühlhausen, Mark, Dipl.-Ing., D-70182 Stuttgart (DE); Uphues, Hans-Wilhelm, D-70106 Magstadt (DE)

(56) Entgegenhaltungen:
- DE-A- 3 442 911
- US-A- 1 725 559
- US-A- 3 855 898
- US-A- 4 473 980
- US-A- 5 096 255

## Beschreibung

Die Erfindung betrifft eine Doppelverglasung für eine Fensteröffnung eines Kraftfahrzeuges mit zwei in Abstand zueinander angeordneten Scheiben, von denen die erste, zur Innenseite des Kraftfahrzeuges gerichtete Schiebe struktursteif mit einem Karosserierahmen des Kraftfahrzeuges verbunden ist und aus einem zertrümmerbaren Sicherheitsglas besteht und die zweite Scheibe aus einem Kunststoff mit gegenüber dem Sicherheitsglas verringertem Gewicht hergestellt ist und von der Fahrzeugaußenseite her mit mehreren über ihren Umfang verteilten Befestigungselementen versehen ist, über die die zweite Scheibe mit dem Karosserierahmen verbunden ist.

Eine derartige Scheibenanordnung ist aus der US-A-3,855,898 bekannt und dient dazu, die Windschutzscheibe vor einem Zersplittern zu bewahren, wenn sie einem Beschuß unterliegt.

Um einen Notausstieg aus einem Kraftfahrzeug, insbesondere bei Kraftomnibussen oder Schienenfahrzeugen zu ermöglichen, ist eine Doppelverglasung aus Silikatglasscheiben bekannt, die im Notfall zertrümmerbar sind. Diese Scheiben weisen ein relativ hohes Gewicht auf.

Aufgabe der Erfindung ist es, eine Doppelverglasung mit geringem Gewicht gemäß der eingangs genannten Art zu schaffen und sicherzustellen, daß im Gefahrenfall nach dem Zertrümmern der innenseitigen Glasscheibe die außenseitige, nicht zertrümmerbare Kunststoffscheibe einem Notausstieg aus dem Kraftfahrzeug nicht im Wege steht.

Diese Aufgabe wird dadurch gelöst, daß im Bereich jedes Befestigungselementes ein Auswurfmechanismus zum Abstoßen der zweiten Scheibe vom Karosserierahmen vorgesehen ist.

In Ausgestaltung der Erfindung weist der Auswurfmechanismus einen am Karosserierahmen beweglich angeordneten Riegel zur Fixierung des Befestigungselementes am Karosserierahmen, der in einer Sperrposition formschlüssig mit dem Befestigungselement verbunden ist, und ein Federelement auf, das am Karosserierahmen abgestützt ist und auf die zweite Scheibe eine vom Karosserierahmen weggerichtete Federkraft ausübt. Dies stellt eine besonders einfache und wirkungsvolle Ausführung eines Auswurfmechanismus dar. In seiner Sperrposition fixiert der Riegel das Befestigungselement am Karosserierahmen, in der Auswurfposition hingegen gibt er das Befestigungselement frei, so daß die Federelemente die Scheibe vom Karosserierahmen wegdrücken und auswerfen.

In weiterer Ausgestaltung der Erfindung ist eine Betätigungsvorrichtung zum gleichzeitigen Auslösen aller Auswurfmechanismen vorgesehen. Dadurch wird die Scheibe gleichzeitig an allen Befestigungselementen vom Karosserierahmen gelöst.

Ein Ausführungsbeispiel der Erfindung ist in der Zeichnung dargestellt und zeigt in perspektivischer Darstellung einen Ausschnitt eines Kraftfahrzeuges im Bereich Zweier Fensteröffnungen, an denen eine Ausführung einer erfindungsgemäßen Doppelverglasung angebracht ist, wobei am linken Fenster nur die erste Scheibe und am rechten Fenster die erste und zweite Scheiben dargestellt sind.

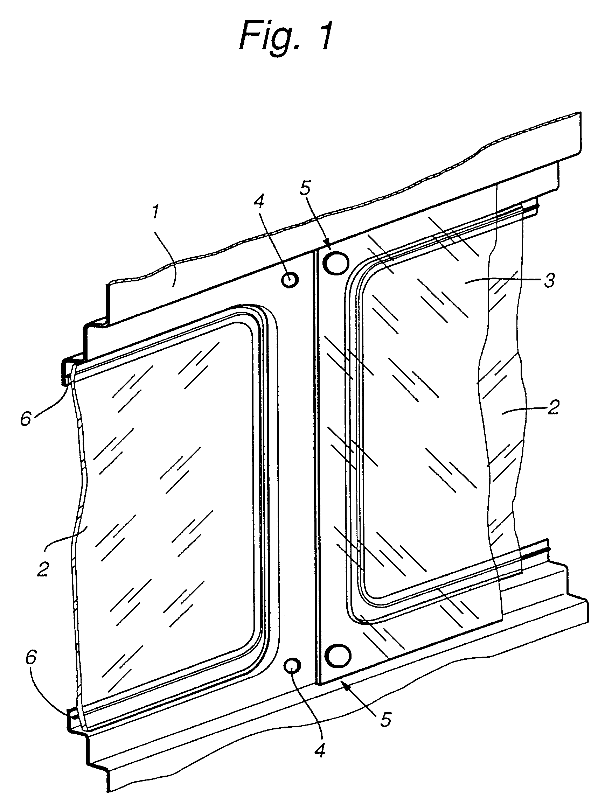

Ein Kraftfahrzeug nach Fig. 1 weist einen Karosserierahmen (1) auf, in dessen Seiten mehrere Fensteröffnungen vorgesehen sind. Jeweils zwei Fensteröffnungen sind durch einen Steg des Karosserierahmens (1) voneinander getrennt. Im Bereich der Fensteröffnungen ist am Karosserierahmen (1) eine im folgenden noch näher beschriebene Doppelverglasung angebracht, die sich durch geringes Gewicht auszeichnet. In einem Notfall ermöglichen die Fensteröffnungen einen Ausstieg aus dem Kraftfahrzeug.

Die in Fig. 1 gezeigte linke Fensteröffnung des Karosserierahmens (1) weist einen nicht näher bezeichneten umlaufenden Rand auf, auf dem ein erste Scheibe (2) aufliegt und mittels einer umlaufenden Kleberaupe (6) an dem Karosserierahmen (1) fixiert ist. Durch die Verklebung der Scheibe (2) ist diese mit dem Karosserierahmen (1) verbunden und erhöht somit durch ihre Schubsteifigkeit die Steifigkeit des Karosserierahmens (1). Die Scheibe (2) ist zur Innenseite des Kraftfahrzeugs gerichtet und bildet daher die Innenscheibe der Doppelverglasung. Sie ist aus Silikatglas hergestellt und bildet damit ein Sicherheitsglas, das mittels eines harten Gegenstandes zertrümmerbar ist und kleine stumpfe Glasscherben ergibt. Im Bereich der Ecken der Fensteröffnung ist im Karosserierahmen (1) jeweils eine kreisrunde Öffnung (4) vorgesehen, die zur Aufnahme je eines Befestigungselementes (5) einer im folgenden noch näher beschriebenen zweiten Scheibe (3) dienen.

Die Scheibe (3) stellt die Außenscheibe der Doppelverglasung dar und ist größer als die Scheibe (2). Der Karosserierahmen (1) weist oberhalb und unterhalb der Fensteröffnungen zur Außenseite abragende Profile auf, deren Abstand zueinander der Höhe der Scheibe (3) entspricht. Die Scheibe (3) ist aus einem durchsichtigen Kunststoff mit gegenüber dem Silikatglas der Scheibe (2) verringertem Gewicht hergestellt. Im Ausführungsbeispiel besteht die Scheibe (3) aus Acrylglas. Mit dieser Ausführung wird gegenüber Silikatglas eine Gewichtsreduzierung um etwa 25 % erreicht. Die Scheibe (3) ist an ihren Eckpunkten mittels Befestigungselementen (5) lösbar mit dem Karosserierahmen (1) verbunden.

Die Scheibe (3) aus Acrylglas ist jedoch nicht zertrümmerbar. Um dennoch im Notfall einen Ausstieg durch die Fensteröffnungen zu ermöglichen, ist im Bereich jedes Befestigungselementes (5) ein im folgenden näher beschriebener Auswurfmechanismus vorgesehen, so daß die Scheibe (3) im Notfall vom Karosserierahmen (1) abgestoßen wird und nach unten fällt.

Das nicht näher dargestellte Befestigungselement (5) weist einen flachen Kopf auf, der an der zweiten Scheibe (3) anliegt. Vom Kopf aus ragt ein Bolzen des Befestigungselementes (5) lotrecht durch eine Öffnung in der Scheibe (3) hindurch nach innen. Am freien Stirnende des Bolzens ist ein Fuß vorgesehen, der einen größeren Durchmesser als der Bolzen aufweist und sich zur Stirnseite hin konusartig verengt. Der Kopf weist eine kreisförmige Grundfläche auf, die dicht an der Außenseite der Scheibe (3) anliegt und so die Öffnung in der Scheibe (3) abdichtet. Im Bereich der Öffnung der Scheibe (3) ist auf ihrer gegenüberliegenden Innenseite zudem ein Sicherungsring so auf dem Bolzen des Befestigungselementes (5) befestigt, daß das Befestigungselement (5) axial in der Öffnung der Scheibe (3) fixiert ist. Die Öffnung (4) im Karosserierahmen (1) weist einen etwas größeren Durchmesser auf als der Fuß des Befestigungselementes (5), so daß der Fuß durch die Öffnung (4) hindurch paßt. Auf der der Scheibe (3) zugerichteten Außenseite des Karosserierahmens (1) ist eine ringförmige Unterlagscheibe angeordnet, deren Innendurchmesser in etwa dem Durchmesser der Öffnung (4) entspricht. Gegen diese Unterlagscheibe einerseits und den Sicherungsring andererseits stützt sich eine als Druckfeder ausgebildete Schraubenfeder ab, die den Bolzen koaxial umgibt. Die Schraubenfeder übt auf die Scheibe (3) eine zum Befestigungselement (5) axial nach außen gerichtete Kraft aus. Um das Befestigungselement (5) und damit die Scheibe (3) in der Sperrposition am Karosserierahmen (1) zu fixieren, ist ein Riegel vorgesehen, der verschiebbar ist und zwei gabelförmige Schenkel aufweist, die den Fuß hintergreifen und so das Befestigungselement (5) in der Sperrposition halten. Der Zwischenraum zwischen den beiden Schenkeln des Riegels ist etwas größer als der Durchmesser des Bolzens.

Der Riegel ist mit einer nicht dargestellten, ihn im Normalfall abstützenden Betätigungsvorrichtung verbunden, die im Bedarfsfall den Riegel so weit verschiebt, bis der Fuß des Befestigungselementes (5) frei ist und so die Federkraft der Schraubenfeder die Scheibe (3) vom Karosserierahmen (1) wegdrückt. Die Betätigungsvorrichtung löst dabei alle Riegel an allen Befestigungselementen (5) der Scheibe (3) gleichzeitig aus, so daß die Scheibe (3) an allen Befestigungspunkten gleichzeitig ausgeworfen wird.

Wie aus der in Fig. 1 rechten Fensteröffnung ersichtlich ist, sind die Scheibe (2) und die Scheibe (3) in Abstand zueinander angeordnet, so daß zwischen Scheibe (2) und Scheibe (3) ein Hohlraum entsteht. Dieser Hohlraum ist durch eine nicht dargestellte umlaufende Gummidichtung abgedichtet, die zwischen der Scheibe (2) und der Scheibe (3) im Randbereich der inneren Scheibe (2) angebracht ist. Diese Dichtung stellt eine Hohlkammerdichtung dar. Es ist auch möglich, die Dichtung zwischen Karosserierahmen (1) und der Scheibe (3) anzuordnen.

## Patentansprüche

1. Doppelverglasung für eine Fensteröffnung eines Kraftfahrzeuges mit zwei in Abstand zueinander angeordneten Scheiben (2, 3), von denen die erste, zur Innenseite des Kraftfahrzeuges gerichtete Scheibe (2) struktursteif mit einem Karosserierahmen (1) des Kraftfahrzeuges verbunden ist und aus einem zertrümmerbaren Sicherheitsglas besteht und die zweite Scheibe (3) aus einem Kunststoff mit gegenüber dem Sicherheitsglas verringertem Gewicht hergestellt ist und von der Fahrzeugaußenseite her mit mehreren über ihren Umfang verteilten Befestigungselementen (5) versehen ist, über die die zweite Scheibe (3) lösbar mit dem Karosserierahmen (1) verbunden ist,
**dadurch gekennzeichnet,**
daß im Bereich jedes Befestigungselementes (5) ein Auswurfmechanismus zum Abstoßen der zweiten Scheibe (3) vom Karosserierahmen (1) vorgesehen ist.

2. Doppelverglasung nach Anspruch 1,
**dadurch gekennzeichnet,**
daß der Auswurfmechanismus einen am Karosserierahmen beweglich angeordneten Riegel zur Fixierung des Befestigungselementes (5) am Karosserierahmen (1), der in einer Sperrposition formschlüssig mit dem Befestigungselement (5) verbunden ist, und ein Federelement aufweist, das am Karosserierahmen (1) abgestützt ist und auf die zweite Scheibe (3) eine vom Karosserierahmen (1) weggerichtete Federkraft ausübt.

3. Doppelverglasung nach Anspruch 1 oder 2,
**dadurch gekennzeichnet,**
daß eine Betätigungsvorrichtung zum gleichzeitigen Auslösen aller Auswurfmechanismen vorgesehen ist.

## Claims

1. Double glazing for a window aperture in a motor vehicle with two spaced apart panes (2, 3) of which the first pane (2) which is directed towards the inside of the motor vehicle is structurally rigidly connected to a body work frame (1) of the motor vehicle and consists of a fragmentable safety glass while the second pane (3) is made from a synthetic plastics material the weight of which is less than that of the safety glass and which, starting from the outside of the vehicle, is provided with a variety of fixing elements (5) which are distributed over its periphery and by which the second pane (3) is separably connected to the body work frame (1), characterised in that in the region of each fixing element (5) there is an ejector mechanism for ejecting the second pane (3) from the body work frame (1).

2. Double glazing according to claim 1, characterised in that the ejector mechanism comprises a bolt movably disposed on the body work frame for fixing the fixing element (5) on the body work frame (1) which, in a locked position, is form-lockingly connected to the fixing element (5), and a spring element which is biased on the body work frame (1) and which exerts on the second pane (3) a spring force which is directed away from the body work frame (1).

3. Double glazing according to claim 1 or 2, characterised in that an actuating device is provided for simultaneous releasing of all the ejector mechanisms.

## Revendications

1. Double vitrage destiné à une ouverture de fenêtre d'un véhicule automobile, comportant deux vitres (2, 3) disposées à distance l'une de l'autre, parmi lesquelles la première vitre (2) orientée vers le côté intérieur du véhicule automobile est reliée d'une manière structurellement rigide à un cadre (1) de carrosserie du véhicule automobile et se compose d'un verre de sécurité susceptible d'être fragmenté et la deuxième vitre (3) est fabriquée en une matière plastique d'un poids relativement moindre que celui du verre de sécurité et est pourvue, du côté extérieur du véhicule, de plusieurs éléments de fixation (5) répartis sur sa périphérie, par lesquels la deuxième vitre (3) est reliée de façon détachable au cadre (1) de carrosserie,
caractérisé en ce que
un mécanisme d'éjection est prévu dans la zone de chaque élément (5) de fixation pour repousser la deuxième vitre (3) à distance du cadre (1) de carrosserie.

2. Double vitrage selon la revendication 1,
caractérisé en ce que
le mécanisme de détection comporte un verrou, disposé de façon mobile sur le cadre de carrosserie et destiné à fixer l'élément (5) de fixation sur le cadre (1) de carrosserie, verrou qui est relié en engagement positif a' l'élément (5) de fixation dans une position de blocage, ainsi qu'un élément élastique qui est appuyé contre le cadre (1) de carrosserie et qui exerce sur la deuxième fenêtre (3) une force élastique orientée de manière à l'éloigner du cadre (1) de carrosserie.

3. Double vitrage selon la revendication 1 ou 2,
caractérisé en ce que
un dispositif d'actionnement est prévu pour libérer simultanément tous les mécanismes d'éjection.
